# EUROPEAN PATENT APPLICATION

(11) **EP 3 232 722 A1**
(43) Date of publication of application: **18.10.2017**
(21) Application number: 16749104.2
(22) Date of filing: 03.02.2016
(51) Int. Cl.: H04W 72/04, H04B 17/345, H04W 24/00, H04W 52/02

(54) **WIRELESS COMMUNICATION CONTROL SYSTEM, WIRELESS COMMUNICATION CONTROL DEVICE, AND WIRELESS COMMUNICATION CONTROL METHOD**

(30) Priority: 13.02.2015 JP 2015026981
(71) Applicant: Omron Corporation, Kyoto-shi, Kyoto 600-8530 (JP)
(72) Inventor: UEKI Daichi, Kyoto-shi Kyoto 600-8530 (JP); SAITO Keisuke, Kyoto-shi Kyoto 600-8530 (JP)
(74) Representative: Horn Kleimann Waitzhofer Patentanwälte PartG mbB
(86) International application number: PCT/JP2016/053146
(87) International publication number: WO 2016/129460

(57) **Abstract**

Provided is a wireless communication control system including a control apparatus that controls driving of one or more driving devices in accordance with a plurality of predetermined driving patterns, a first radio having a directional antenna, and a second radio, wherein when the control apparatus controls driving of a driving device according to a driving pattern, transmission control is performed such that information is transmitted to a reception radio in wireless communication between the first radio and the second radio, under a predetermined communication condition other than a wireless communication prohibition condition under which wireless communication between the first radio and the second radio is prohibited, the predetermined communication condition being determined based on predetermined noise information. Accordingly, it is possible to realize wireless communication that is not easily influenced by noise.

## Description

### TECHNICAL FIELD

The present invention relates to a wireless communication control system and the like for controlling wireless communication between a first radio and a second radio.

### RELATED ART

In general, when a radio transfers information, the radio utilizes a signal in a predetermined frequency band that is allocated thereto. However, if noise having a frequency component near the predetermined frequency is generated, suitable information transfer between radios is influenced and inhibited by this noise. In this manner, the manner in which resistance to noise is ensured in information transfer via wireless communication is an extremely important factor for also forming a stable wireless communication environment. For example, with regard to wireless communication between a mobile terminal held by a user and a car-mounted device that is mounted in a vehicle, Patent Document 1 discloses technology for informing a user of the influence of noise during the operation of the car-mounted device. With this technology, the influence of electromagnetic noise generated by rotation of an engine switch of the vehicle on wireless communication is considered.

Also, Patent Document 2 discloses technology for avoiding failure of wireless communication in a wireless LAN system due to the influence of noise. Specifically, if wireless communication cannot be performed between a master device and a slave device, a specific slave device among slave devices takes place of the master device and performs communication with the slave device that cannot communicate with the master device.

### RELATED ART DOCUMENTS

### PATENT DOCUMENTS

Patent Document 1: JP 2007-191891A
Patent Document 2: WO 2008/139830

### SUMMARY OF THE INVENTION

### PROBLEM TO BE SOLVED BY THE INVENTION

In recent years, in the field of FA (factory automation) as well, there is an increasing tendency for wireless communication to be used for the transfer of a control signal to a driving device by a control apparatus or the transfer of measurement data measured by various sensors to a control apparatus for collection, for example. Conventionally, cable communication has been widely used for these signals and data in consideration of the stability of communication. However, if cable communication is used, there is a significant limitation on the design of the manufacturing line. In view of this, it is thought that utilizing wireless communication not only increases the degree of freedom of the design of the manufacturing line but also increases the maintainability of the manufacturing line and a manufacturing apparatus due to elimination of a transfer cable.

On the other hand, wireless communication for transferring a control signal, measurement data, and the like tends to be influenced by noise generated for various reasons. In particular, in a factory or the like, a motor is driven so as to transport a material, and welding, pressing, or the like is performed for manufacturing, and thus noise having various frequencies is generated due to these manufacturing processes. Thus, among such noise, noise having a frequency that is close to a frequency band used in wireless communication between radios tends to destabilize the wireless communication between radios, in particular. Conventionally, the SN ratio of wireless communication is set high in order to provide wireless communication with resistance to such noise, but in an environment in which various types of noise are generated, increasing the SN ratio cannot be said to be sufficient.

The present invention was made to solve such problems, and an object of the present invention is to realize wireless communication that is not easily influenced by noise in a wireless communication control system in the FA field or the like.

### MEANS FOR SOLVING THE PROBLEMS

In order to resolve the above-described issues, the present invention focused on the fact that control of the driving of a driving device by a control apparatus tends to generate noise, and this drive control is performed in accordance with a predetermined driving pattern in the FA field. That is, the inventor of the invention thought that if the pattern for controlling the driving of the driving device that causes noise is determined in advance, the situation in which such noise is generated can be also understood to some extent in advance, and by accordingly adjusting conditions in which wireless communication between radios is executed, and controlling the transmission of this information, it is possible to realize wireless communication that is not influenced by noise caused by controlling the driving of the driving device.

Specifically, the present invention is a wireless communication control system including a control apparatus that controls driving of a driving device in accordance with a predetermined driving pattern, a first radio, and a second radio formed to be capable of performing wireless communication with the first radio, in which out of the first radio and the second radio, a radio that performs transmission has a storage unit that stores predetermined noise information that is produced by measuring a noise signal caused by driving of the driving device in a state in which the driving of the driving device is controlled by the control apparatus in accordance with the driving pattern, an acquisition unit that acquires the driving pattern that the control apparatus executes for the driving device, and a control unit that selects the predetermined noise information from the storage unit in accordance with the driving pattern acquired by the acquisition unit, and performs transmission control such that information is transmitted to a reception radio in wireless communication between the first radio and the second radio, under a predetermined communication condition other than a wireless communication prohibition condition under which wireless communication between the first radio and the second radio is prohibited, the predetermined communication condition being determined based on the predetermined noise information.

The wireless communication control system according to the present invention is a system that performs control relating to wireless communication between a first radio and a second radio. The control apparatus is an apparatus that controls driving of a driving device, and the driving is controlled in accordance with a preset driving pattern. Thus, if the control apparatus controls driving of the driving device utilizing the driving pattern, the first radio and the second radio performs wireless communication in an environment in which the driving of this driving device is controlled in accordance with this driving pattern. Therefore, noise generated by the driving of the driving device affects wireless communication between the first radio and the second radio.

Here, the driving pattern for the control apparatus utilizing the driving device is determined in advance, and thus it is thought that a noise signal caused by the driving of the driving device has reproducibility to some extent. Thus, it is thought that the effect of the noise signal on the wireless communication between the first radio and the second radio also significantly depends on the driving pattern executed by the control apparatus. In view of this, in the wireless communication control system according to the present invention, predetermined noise information is used, the noise information being information relating to the generation of a noise signal, being produced based on a noise signal measured in a state in which the driving of the driving device is controlled by the control apparatus in accordance with the driving pattern (also referred to as "pattern driving control state"), and being associated with the pattern for driving the driving device. Note that with regard to the production of this predetermined noise information, a configuration may also be adopted in which the first radio is electrically connected to the control apparatus and has a noise information production unit that performs the production, or as another method, a configuration may also be adopted in which the above-described wireless communication control system further includes a noise information production apparatus that is electrically connected to the control apparatus and produces the predetermined noise information.

Moreover, out of the first radio and the second radio, a storage unit of a radio that performs transmission stores the predetermined noise information produced by the noise information production unit. Note that in the case where the first radio and the second radio transmit information to each other, the two radios are both transmission radios, and thus, in this case, the two radios need only each have a storage unit and the storage units store the predetermined noise information. The same applies to the later-described acquisition unit and control unit in this respect. As described above, the predetermined noise information is information that is associated with the pattern for driving the driving device and relates to the generation of the noise signal, and thus the storage unit stores how the noise signal that influences wireless communication between the first radio and the second radio is generated in a state in which the control apparatus controls the driving of the driving device in accordance with the driving pattern, that is, stores information indicating the correlation between the driving pattern and the generated noise signal.

In view of this, the control unit selects predetermined noise information relating to the generated noise signal corresponding to the driving pattern from the storage unit, in accordance with the driving pattern acquired by the acquisition unit, and determines a predetermined communication condition for a transmission radio that performs information transmission based on the predetermined noise information. Based on the correlation between the driving pattern indicated in the predetermined noise information and the generated noise signal, this predetermined communication condition is a communication condition other than a wireless communication prohibition condition under which wireless communication is prohibited because the noise signal influences transmission of information from the radio that performs transmission in the pattern driving control state. Thus, the control unit utilizes the noise signal generation condition that is understood in advance and determines a predetermined communication condition under which wireless communication is not easily influenced by this noise signal in the pattern driving control state. Then, the radio that performs transmission controls the transmission in accordance with this predetermined communication condition. As a result, the influence of a noise signal generated in this pattern driving control state on wireless communication between radios can be suppressed as much as possible, and accordingly suitable wireless communication can be realized.

Here, in the above-described wireless communication control system, the predetermined communication condition may also be that in the driving pattern, the transmission control is performed at a communication permission time other than a predetermined noise generation time at which a noise signal having a frequency belonging to a predetermined frequency band used in wireless communication between the first radio and the second radio is generated. That is, by transmitting information at a time other than a predetermined noise generation time at which a noise signal is generated in the driving of the driving device in accordance with the driving pattern, suitable wireless communication is realized even in an environment in which the noise signal is generated.

Also, the predetermined noise generation time may be a time at which a noise signal having a frequency belonging to the predetermined frequency band is generated and an intensity of the noise signal is higher than a predetermined intensity. All of the noise signals generated by the driving of the driving device do not necessarily influence wireless communication between radios. It is thought that the higher the intensity of the noise signal is, the more likely the noise signal tends to influence wireless communication. In view of this, a configuration is adopted in which transmission of information from a radio who performs transmission is prohibited when a noise signal having a signal intensity that is higher than a predetermined intensity that is assumed to influence wireless communication is generated. Accordingly, the wireless communication prohibition condition is limited, and thus the predetermined communication condition can be determined more easily.

Also, in the above-described aspects of transmission control in which information is transmitted at the above-described communication permission time, the control unit may perform the transmission control such that the predetermined noise generation time in the driving pattern is positioned in a non-communication period during which actual wireless communication is not performed in a period of wireless communication between the first radio and the second radio in accordance with the communication permission time. That is, if periodic wireless communication is performed between radios, interference between the noise signal and wireless communication between radios can be eliminated as much as possible by performing transmission control such that periodic wireless communication is adjusted such that the noise generation time is in the non-communication period during which actual wireless communication is not performed during such periodic wireless communication.

Note that as one example of adjusting the periodic wireless communication, the control unit may position the predetermined noise generation time in the non-communication period by controlling time at which wireless communication according to the wireless communication period is started based on the predetermined noise generation time in the driving pattern. The noise signal is generated by controlling the driving of the driving device using the driving pattern, and thus the noise generation time is positioned at a specific time in the driving pattern, and thus basically, it is difficult to adjust this time. In view of this, controlling the time at which periodic wireless communication between radios is started makes it possible to avoid the interference as much as possible between the noise signal and wireless communication between radios while controlling the driving of the driving device in accordance with the driving pattern.

Here, instead of the aspect in which the predetermined communication condition is the condition that information is transmitted at the communication permission time, the following aspect can also be adopted. That is, the predetermined communication condition may be that if the measured noise signal includes a noise signal having a frequency belonging to a predetermined frequency band used in wireless communication between the first radio and the second radio, the transmission control is performed in a frequency band for wireless communication other than the predetermined frequency band. That is, by transmitting information with a frequency that is different from the frequency of the noise signal in the driving of the driving device in accordance with the driving pattern, suitable wireless communication is realized even in an environment in which the noise signal is generated.

Here, in the above-described wireless communication control system, the second radio may be a sensor-equipped radio including a sensor that measures a predetermined environmental parameter. In this case, the invention of this application achieves suitable wireless communication for transferring measurement data measured by the sensor of the second radio to the first radio.

Also, the present invention has an aspect of a wireless communication control apparatus. That is, the present invention is a wireless communication control apparatus that controls wireless communication performed by a first radio configured to be capable of performing wireless communication with a second radio in a predetermined environment in which driving of a driving device is controlled by a control apparatus in accordance with a predetermined driving pattern, the wireless communication control apparatus including a storage unit that stores predetermined noise information that is produced by measuring a noise signal caused by the driving of the driving device in a state in which the driving of the driving device is controlled by the control apparatus in accordance with the driving pattern, an acquisition unit that acquires the driving pattern that the control apparatus executes for the driving device, and a control unit that selects the predetermined noise information from the storage unit in accordance with the driving pattern acquired by the acquisition unit, and performs transmission control such that information is transmitted to a reception radio in wireless communication between the first radio and the second radio, under a predetermined communication condition other than a wireless communication prohibition condition under which wireless communication between the first radio and the second radio is prohibited, the predetermined communication condition being determined based on the predetermined noise information. Accordingly, it is possible to realize wireless communication that is not easily influenced by noise. Note that the technical disclosed idea of the invention of this application relating to the above-described wireless communication control system can also be applied to the wireless communication control apparatus as long as no technical discrepancy arises. Also, a configuration may also be adopted in which the above-described wireless communication control apparatus is included in the first radio.

Here, the present invention also has an aspect of a method for controlling wireless communication. That is, the present invention is a method for controlling wireless communication that controls wireless communication performed by a first radio configured to be capable of performing wireless communication with a second radio in a predetermined environment in which driving of a driving device is controlled by a control apparatus in accordance with a predetermined driving pattern, the wireless communication control method including an acquisition step of the control apparatus acquiring a driving pattern that is applied to the control device, a determination step of determining, based on predetermined noise information that is selected in accordance with the driving pattern acquired in the acquisition step and is produced using a noise signal caused by driving of the driving device, a predetermined communication condition other than a wireless communication prohibition condition under which wireless communication between the first radio and the second radio is prohibited, and a control step of preforming transmission control such that information is transmitted to a reception radio in wireless communication between the first radio and the second radio under the predetermined communication condition that is determined in the determination step. Accordingly, it is possible to realize wireless communication that is not easily influenced by noise. Note that the disclosed technical idea of the invention relating to the above-described wireless communication control system can also be applied to the wireless communication control method as long as no technical discrepancy arises.

### EFFECTS OF THE INVENTION

In the wireless communication control system, it is possible to realize wireless communication that is not easily influenced by noise.

### BRIEF DESCRIPTION OF THE DRAWINGS

FIG. 1 is a diagram showing a schematic configuration of a wireless communication control system according to the present invention.
FIG. 2 is a functional block diagram of a radio 1 included in the wireless communication control system shown in FIG. 1.
FIG. 3 is a functional block diagram of a radio 2a included in the wireless communication control system shown in FIG. 1.
FIG. 4 is a flowchart of processing for producing noise information in the wireless communication control system shown in FIG. 1.
FIG. 5 is a diagram for illustrating a noise signal generated in spot welding performed using a welding robot.
FIG. 6 is a diagram showing a schematic structure of database relating to noise information used in the wireless communication control system shown in FIG. 1.
FIG. 7 is a flowchart of processing for transferring measurement information from the radio 2a to the radio 1 in the wireless communication control system shown in FIG. 1.
FIG. 8 is a diagram for illustrating control of time at which the measurement information is transmitted from the radio 2a when measurement information transfer processing shown in FIG. 7 is performed.

### EMDODIMENTS OF THE INVENTION

A wireless communication control system (hereinafter, also referred to as simply "system" in some cases) 10 according to the present invention, a radio 1, radios 2a and 2b, a control apparatus 5, and a noise detector 6 included in this system will be described with reference to the drawing. Note that the configuration of the following embodiment is merely an example, and the present invention is not limited to the configuration of this embodiment.

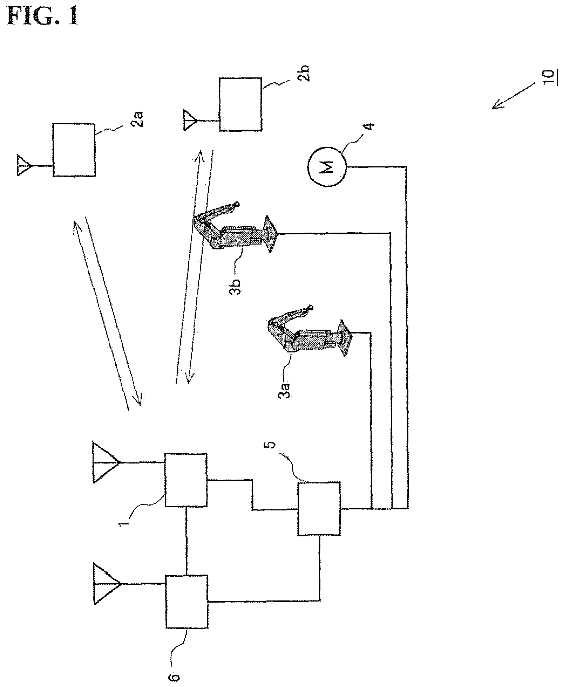

FIG. 1 is a diagram showing a schematic configuration of the system 10 used in the field of FA (factory automation) in a factory or the like, and the arrangement of robots 3a and 3b and a motor 4 whose driving is controlled by the control apparatus 5 included therein. Specifically, the system 10 includes the control apparatus 5 such as a PLC (programmable logic controller), and the driving of the robots 3a and 3b and the motor 4 is controlled by this control apparatus 5 in accordance with a predetermined driving pattern. Note that control of the driving of the robot 3a and the like by the control apparatus 5 is conventional technology, and is not central to the invention of this application, and thus specific description thereof is omitted.

Here, the radio 1 is electrically connected to the control apparatus 5 with a cable. This radio 1 has an antenna for communication, and can transfer radio waves to a partner radio that performs wireless communication in the factory in which the system 10 is disposed, and also receive radio waves from a partner radio. In this working example, a radio 2a and a radio 2b are disposed in the system 10 as the radios that are the partners of the radio 1. Similarly, the radio 2a and the radio 2b each also have an antenna for communication.

Also, the radios 2a and 2b are provided with a sensor for measuring outside environment parameters (temperature, humidity, acceleration, and the like). Information measured by the provided sensors (measurement information) is transmitted from the radios 2 to the radio 1, is collected in the radio 1, and is subjected to predetermined processing in the control apparatus 5. Here, examples of the sensors provided in the radios 2a and 2b include physical system sensors such as a temperature sensor, a humidity sensor, an illuminance sensor, a flow sensor, a pressure sensor, a ground temperature sensor, and a particle sensor, and chemical system sensors such as a CO₂ sensor, a pH sensor, an EC sensor, and a soil moisture sensor. In the present embodiment, in order to simplify the description, it is assumed that the radios 2a and 2b are provided with only a temperature sensor for measuring the external temperature at positions at which the radios 2a and 2b are disposed.

In the system 10 having such a configuration, in a state in which the driving of the robots 3a and 3b and the motor 4 is controlled by the control apparatus 5 with a predetermined driving pattern in order to manufacture a product in the factory (hereinafter, also referred to as "pattern driving control state"), information on the temperature measured by the temperature sensors at the positions at which the radios 2a and 2b are installed is transferred to the radio 1 through wireless communication. Also, required control information is transferred from the radio 1 to the radios 2a and 2b in accordance with the states of the radios 2a and 2b.

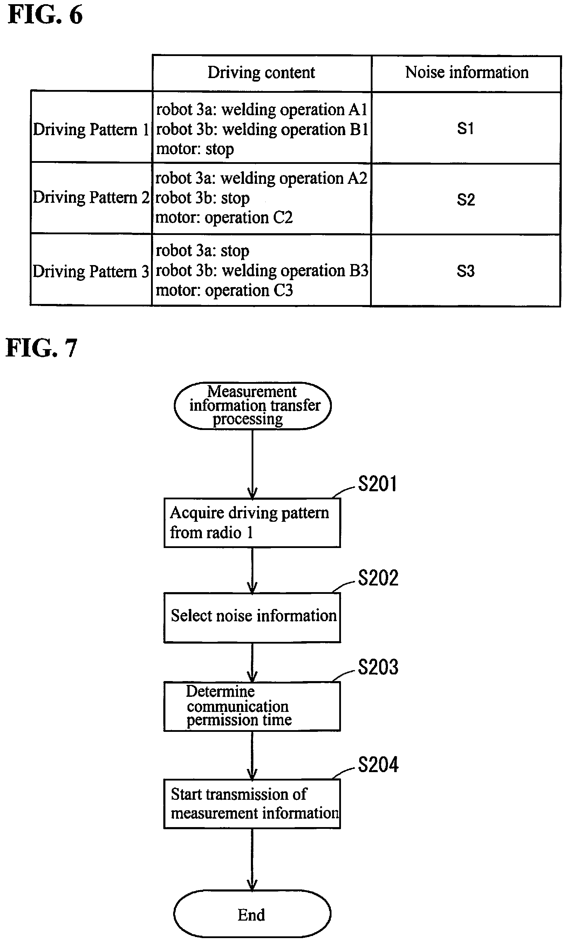

Also, in the present embodiment, the above-described robots 3a and 3b are welding robots for performing spot welding. Thus, if spot welding that is required for a predetermined workpiece is to be performed in accordance with an instruction given from the control apparatus 5, the robots 3a and 3b position a spot welder provided in the robots with respect to the predetermined workpiece, and input a driving electric current to this spot welder. This positioning operation and operation for inputting a driving electric current to the spot welder are collectively referred to as "welding operation". The control apparatus 5 applies the following three driving patterns to the robots 3a and 3b and the motor 4 as predetermined driving patterns. For example, as Driving Pattern 1, the robot 3a is caused to execute a welding operation A1 and the robot 3b is caused to execute a welding operation B1 in a state in which the motor 4 is stopped. Furthermore, as Driving Pattern 2, the robot 3a is caused to execute a welding operation A2 and the motor 4 is caused to execute an operation C2 in a state in which the robot 3b is stopped. Moreover, as Driving Pattern 3, the robot 3b is caused to execute a welding operation B3 and the motor 4 is caused to execute an operation C3 in a state in which the robot 3a is stopped. Note that the types of driving pattern are also disclosed in FIG. 6 that will be described later.

Here, in the system 10 placed in the FA environment, the welding operations are executed by the robots 3a and 3b in accordance with control instructions given from the control apparatus 5, and a large driving electric current is input to the spot welders during the welding operation. Thus, when the robots 3a and 3b perform spot welding, a noise signal will be generated due to this driving electric current in the space in which the system 10 is disposed. Because information is transferred by wireless communication between the radio 1 and the radios 2a and 2b, if a noise signal is generated due to spot welding, suitable wireless communication between radios is inhibited, and it is difficult to accurately transfer information in some cases. In particular, the welding operation is included in all of the Driving Patterns 1 to 3 above executed according to the driving instructions given from the control apparatus 5, and thus when these driving patterns are executed, there is concern about the influence of the noise signal on wireless communication between radios.

In view of this, the system 10 according to the invention of this application further includes a noise detector 6. The noise detector 6 is an apparatus for measuring a noise signal generated in the space in which the system 10 is disposed when the pattern driving control state is formed by the control apparatus 5, and is electrically connected to the radio 1 and the control apparatus 5 by a cable. Note that although the noise detector 6 is separate from the radio 1 in FIG. 1, instead of this aspect, these members may also be formed such that the noise detector 6 is included in the radio 1. Accordingly, the noise detector 6 can acquire information on the driving pattern executed by the control apparatus 5, and acquire information and the like relating to wireless communication between radios from the radio 1. Also, the noise detector 6 has a measurement antenna for measuring a noise signal. The noise detector 6 produces noise information based on the measured noise signal. This noise information is information for specifying a noise signal if the noise signal can possibly influence wireless communication between radios. For example, the time at which the noise signal is generated, the frequency included in the noise signal, and the like are parameters that can be adopted as noise information.

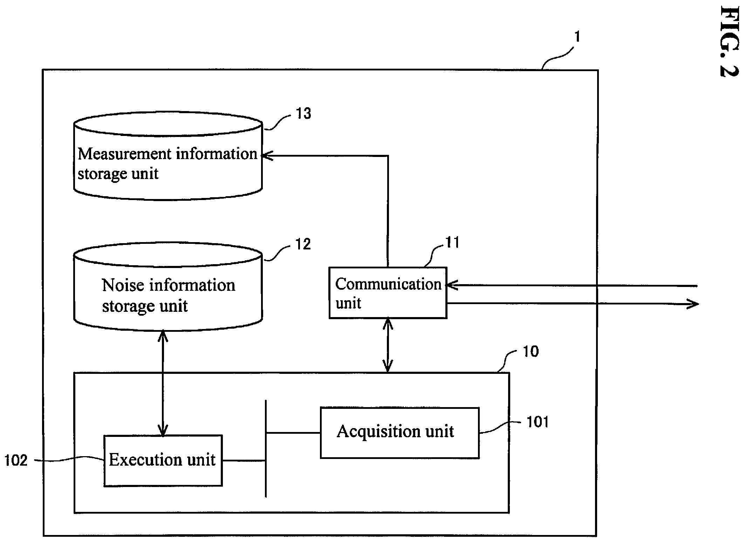

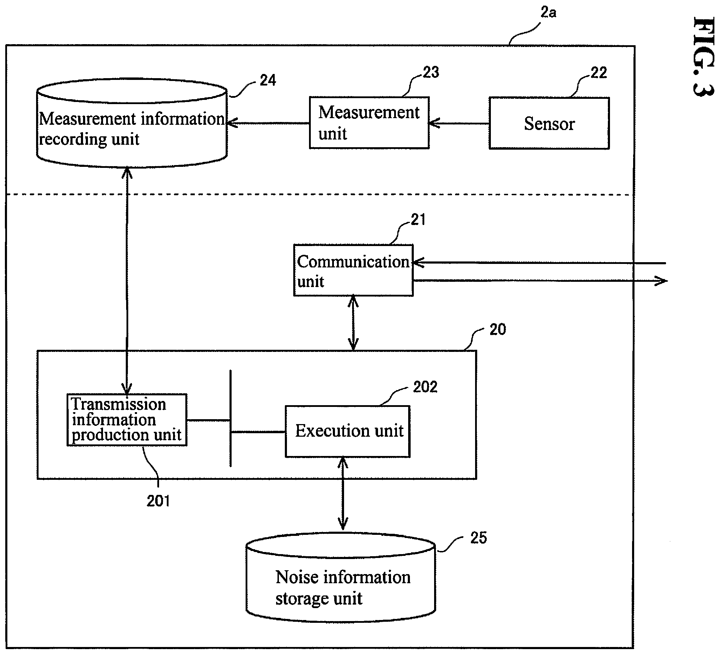

In order to protect the stability of wireless communication from the noise signal in the pattern driving control state, a configuration is adopted in which conditions of transmission from a radio that performs transmission are adjusted and transmission is controlled in accordance with the driving of the robot 3a and the like controlled by the control apparatus 5, which is the cause of the noise signal. Specifically, the radio 1 and the radios 2a and 2b are configured as shown in FIGS. 2 and 3. The radio 1 and the radios 2a and 2b each internally have an arithmetic unit, a memory, and the like, and not only the wireless communication function but also various functions are exhibited by these arithmetic units executing predetermined control programs. FIGS. 2 and 3 are functional block diagrams showing an illustration of the functions of the radio 1 and radios 2a and 2b. Note that the radio 2a and the radio 2b have basically the same functions, and thus in this embodiment, FIG. 3 shows a functional block diagram of the radio 2a as a representative example.

First, the radio 1 has a control unit 10, a communication unit 11, a noise information storage unit 12, and a measurement information storage unit 13 as functional units. Hereinafter, functional units of the radio 1 will be described. The control unit 10 is a functional unit that performs various control in the radio 1, and in particular, has an acquisition unit 101 and an execution unit 102. The acquisition unit 101 is a functional unit that acquires information relating to the driving pattern that the control apparatus 5 applies to the robot 3a and the like from the control apparatus 5 that is electrically connected to the radio 1. In the present embodiment, as described above, the driving of the robot 3a and the like is controlled in accordance with the three predetermined driving patterns Driving Patterns 1 to 3, and the corresponding pattern driving control states are formed. Then, the acquisition unit 101 acquires information relating to the driving pattern corresponding to the pattern driving control state.

Also, the execution unit 102 is a functional unit that selects, from a later-described noise information storage unit 12, noise information used to control transmission when information is transmitted to the radio 2a or the like based on the driving pattern acquired by the acquisition unit 101, and executes wireless communication between the radio 1 and the radio 2a or the like utilizing this noise information, particularly executing wireless communication in a case where the radio 1 functions as a radio that performs transmission. As described above, the noise information is information relating to a noise signal generated in the space in which the system 10 is disposed when the robot 3a and the like are in a pattern driving control state, and in other words, the noise information is also information suggesting communication conditions for wireless communication that does not interfere with the noise signal indicated therein. In view of this, the execution unit 102 can realize suitable wireless communication between the radio 1 and the radio 2a or the like that is not influenced by the noise signal generated in a pattern driving control state.

Also, the communication unit 11 is a functional unit that communicates with a device external to the radio 1, that is, transmits and receive information to/from the external device. Specifically, the communication unit 11 is formed so as to interact with the control unit 10. As a result, the communication unit 11 handles reception of information relating to the driving pattern by the acquisition unit 101, wireless communication between radios utilizing noise information selected by the execution unit 102, and the like. The noise information storage unit 12 is a functional unit that stores the above-described noise information generated by the noise detector 6 in the memory, and the measurement information storage unit 13 is a functional unit that stores temperature information in the memory after the communication unit 11 receives the information on the temperature that was measured by the radio 2a that is a communication partner or the like and was transferred therefrom. At the time of transferring this temperature information, noise information stored in the radio 2a or the like, which will be described later, is utilized.

Next, the functional units of the radio 2a will be described with reference to FIG. 3. The radio 2a has, as functional units, a control unit 20, a communication unit 21, a measurement unit 23, a measurement information recording unit 24, and a noise information storage unit 25, and in the case of the present embodiment, the radio 2a is provided with a sensor 22 for measuring a temperature. Hereinafter, functional units of the radio 2a will be described. The control unit 20 is a functional unit that performs various control in the radio 2a, and in particular, has a transmission information production unit 201 and an execution unit 202. This transmission information production unit 201 is a functional unit that produces transmission information including the information on the temperature measured by the sensor 2a. Also, the execution unit 202 is a functional unit that selects, from the later-described noise information storage unit 25, noise information that is to be used to control transmission when information is transmitted to the radio 1 based on the driving pattern transferred from the radio 1, and executes wireless communication between the radio 1 and the radio 2a or the like utilizing this noise information, particularly executing wireless communication in a case where the radio 2a functions as a transmission radio. The noise information is the same as in the description of the radio 1.

Next, the communication unit 21 is a functional unit that performs wireless communication with the radio 1. Specifically, the communication unit 21 is formed so as to interact with the control unit 20. As a result, the communication unit 21 handles transfer of transmission information produced by the transmission information production unit 201 and the like. The measurement unit 23 is a functional unit that measures the temperature via the temperature sensor 22 in the environment in which the radio 2a is disposed. Measurement of the temperature by this measurement unit 23 is executed under the instruction of the control unit 20, and the measured temperature information is stored in a memory by the measurement information recording unit 24 at any time. This measurement information recording unit 24 is formed so as to interact with the control unit 20, and the recorded measurement information is passed to the control unit 20 in accordance with an instruction given by the control unit 20, and transmission information is produced by the transmission information production unit 201. Also, similarly to the above-described noise information storage unit 12, the noise information storage unit 25 is a functional unit that stores the noise information produced by the noise detector 6 in the memory.

### Noise information production processing

The following desribes processing relating to wireless communication between the radio 1 and the radio 2a that have the above configurations, and in particular, wireless communication for transferring information on the temperature measured by the radio 2a to the radio 1. When wireless communication is performed between the radio 1 and the radio 2a, as described above, there is a possibility that the stability of wireless communication will decrease due to the influence of a noise signal caused due to the robot 3a or the like being driven by the control apparatus 5 in accordance with a predetermined driving pattern. Here, in the system 10 according to the invention of this application, focus was placed on the fact that in the driving control performed by the control apparatus 5 in accordance with a driving pattern, the driving of the robot 3a and the like are controlled with predetermined operation content. It can be thought that the influence of the noise signal that is generated due to such driving control performed in accordance with the driving pattern also approximately has reproducibility. In view of this, before the driving of the robot 3a and the like is controlled in order to manufacture a product in the factory, the robot 3a and the like are experimentally driven by the control apparatus 5 with the same operational content, and the influence of the noise signal at that time on wireless communication between the radio 1 and the radio 2a is measured by the noise detector 6, and noise information relating to this is produced. Because this noise information is information relating to the production of the noise information associated with the driving pattern, radios can execute information transmission that is not easily influenced by the noise signal by utilizing this noise information.

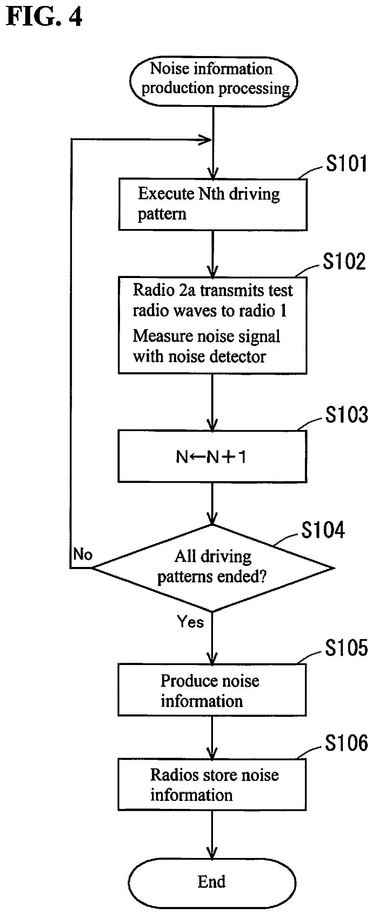

The flow of processing for producing this noise information is shown in the flowchart in FIG. 4. This noise information production processing is executed through cooperation between the noise detector 6 and the radio 1, the radio 2a, or the like. Hereinafter, this noise information production processing will be described. First, in step S101, in order to produce noise information, the noise detector 6 requests the control apparatus 5 to successively execute a plurality of driving patterns (three driving patterns Driving Patterns 1 to 3 in the case of the present embodiment) that are executed on the robot 3a and the like. Accordingly, the control apparatus 5 controls the driving of the robot 3a and the like in accordance with the driving patterns in order starting from Driving Pattern 1, and wireless communication between the radio 1 and the radio 2a is in the pattern driving control state in which the driving of the robot 3a and the like is controlled.

In step S102, processing between the radio 2a and the radio 1 and processing in the noise detector 6 are performed in parallel to each other. First, in communication between the radio 2a and the radio 1, test radio waves are transmitted from the radio 2a to the radio 1 in the pattern driving control state relating to an Nth driving pattern. Here, the interval between times at which the test radio waves are transmitted is a sufficiently short interval with respect to a change in the noise signal assumed in the pattern driving control state, that is, an interval short enough to sufficiently understand the influence of the noise signal caused by driving control according to the driving pattern. Then, in the radio 1 that has received the test radio waves, transition in the received signal intensity is recorded. On the other hand, in the noise detector 6, a noise signal generated in the space in which the system 10 is disposed is measured utilizing an antenna for noise detection in parallel to the transmission and reception of the above-described test radio waves. When the processing of step S102 ends, the processing advances to step S103.

In step S103, N indicating which driving pattern is executed to produce the noise information in step S101 is incremented. Then, in step S104, in order to produce the noise information, it is determined whether or not the control of the driving of the robot 3a and the like that is performed by the control apparatus 5 in accordance with all of the driving patterns has ended. If an affirmative determination is made in step S104, the processing advances to step S105, whereas if a negative determination is made, the processing of step S101 onward is repeated again.

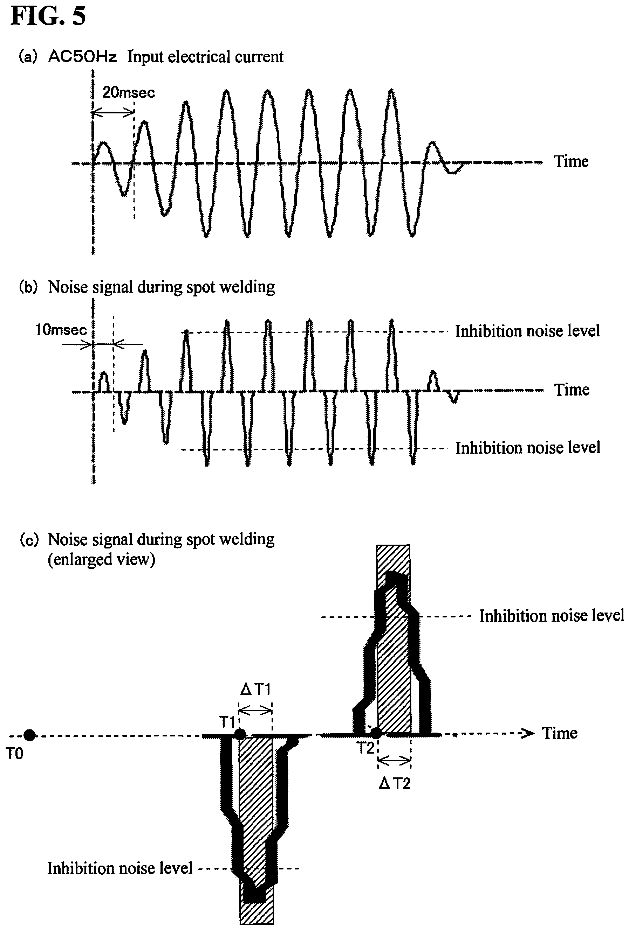

Then, in step S105, noise information corresponding to each driving pattern is produced based on the noise signal measured by the noise detector 6 and the received signal intensity for the test radio waves measured by the radio 1 in step S102 above. The noise information is produced by the noise detector 6, and its production processing will be described with reference to FIG. 5. In FIG. 5, the top (a) shows transition in an electric current that is input to a spot welder provided on the robot 3a when driving is controlled in accordance with a specific driving pattern (for example, Driving Pattern 2), the middle (b) schematically shows transition in a noise signal measured by the noise detector 6 at that time, and the bottom (c) shows an enlarged diagram of part of this noise signal.

Here, an inhibiting noise level of the noise signal is determined based on the received signal intensity for the test radio waves measured by the radio 1 in step S102, considering the influence of the noise signal on the transmission and reception of the test radio waves. Specifically, the inhibiting noise level is the threshold value of the intensity of the noise signal when the received signal intensity for the test radio waves falls below a predetermined signal intensity required for stable wireless communication. It is thought that a noise signal having a signal intensity that is higher than or equal to this inhibition noise level has a negative influence on wireless communication between radios. Therefore, as shown in FIG. 5(c), a section (temporal section) in which the intensity of the noise signal is higher than or equal to the inhibition noise level corresponds to the time at which the noise signal that influences wireless communication is generated (noise generation time according to the present invention).

In step S105, this noise generation time in the executed driving pattern is produced as one type of noise information. For example, in the example shown in FIG. 5(c), noise information is produced to indicate that the noise signal continues for a time period ΔT1 from a time T1 at which a predetermined time has elapsed from a driving pattern start time T0 and the noise signal continues for a period ΔT2 from a time T2 at which a predetermined time has elapsed from the start time T0, for example. In this manner, each noise generation time is defined by the time elapsed from the start time T0 and a duration. Also, other examples of the noise information include the frequency of the noise signal measured by the noise detector 6 or the frequency band.

The production of this noise information is also similarly performed for Driving Patterns 1 and 3. Then, the noise information corresponding to the driving patterns produced in step S105 is passed to the radio 1 from the noise detector 6 as one database, and is stored in the memory by the noise information storage unit 12 (processing of step S106). At this time, as shown in FIG. 6, the noise information is stored in a state in which the driving patterns and the corresponding noise information are associated with each other. In this embodiment, noise information S1 is associated with Driving Pattern 1, noise information S2 is associated with Driving Pattern 2, and noise information S3 is associated with Driving Pattern 3. Furthermore, the radio 1 transmits the database for the received noise information to the radio 2a, and the radio 2a that received the database stores the database in its memory using the noise information storage unit 25 (processing of step S106).

Note that the above-described noise information production processing is processing for producing noise information relating to wireless communication between the radio 1 and the radio 2a. The noise information relating to wireless communication between the radio 1 and the radio 2b need only be produced by the radio 2b similarly transmitting test radio waves in the pattern driving control state. Also, if wireless communication environments of the radio 2a and the radio 2b with the radio 1 can be considered to be approximately identical, for example, the radio 2a and the radio 2b are placed at a relatively close distance, the noise information relating to wireless communication between the radio 1 and the radio 2a may also be shared as the noise information relating to wireless communication between the radio 1 and the radio 2b.

### Measurement information transfer processing

The radio 1 and the radio 2a each have noise information produced in the noise information production processing shown in FIG. 4 via their noise information storage units, and thus it is possible to understand the situation in which noise corresponding to the respective driving patterns is generated, in a state in which the control apparatus 5 controls the driving of the robot 3a and the like in accordance with Driving Patterns 1 to 3. In other words, when driving is controlled in accordance with any of Driving Patterns 1 to 3, the radio 1 and the radio 2a can understand, based on the noise information, under what conditions in that driving pattern the noise signal that influences wireless communication between radios is generated. As a result, it is possible to realize wireless communication that is not easily influenced by a noise signal, considering the understandable conditions under which a noise signal is generated, if the radio 1 or the radio 2a functions as a transmission radio, that is, if any type of information needs to be transferred to a partner (reception) radio. In view of this, measurement information transfer processing, which is one aspect of this information transfer will be described with reference to FIG. 7. This measurement information transfer processing is executed by the radio 2a in order to transfer information on the temperature measured by the radio 2a to the radio 1 via wireless communication.

First, in step S201, the control unit 20 acquires, via the communication unit 21, information relating to which of the driving patterns is being executed to control the driving of the robot 3a and the like by the control apparatus 5 at this point in time. Specifically, if the control apparatus 5 controls the driving of the robot 3a and the like, information of the used driving pattern is acquired by the acquisition unit 101 of the radio 1. Then, the information on the acquired driving pattern is transmitted from the radio 1 to the radio 2a, and the control unit 20 of the radio 2a acquires this driving pattern. Note that in the driving pattern acquisition processing in this radio 2a, the control apparatus 5 may also transmit information of this driving pattern to the radio 2a via the radio 1 every time the control apparatus 5 controls the driving of the robot 3a and the like in accordance with a predetermined driving pattern. As another method, the radio 2a may also request the radio 1 to transmit information on the driving pattern every time the radio 2a transmits measurement information. When the processing of step S201 ends, the processing advances to step S202.

In step S202, the noise information corresponding to the driving pattern is selected from the database (see FIG. 6) stored in the noise information storage unit 25 based on the information on the driving pattern acquired in step S201. For example, if the acquired driving pattern is Driving Pattern 2, the noise information S2 is selected. When the processing of step S202 ends, the processing advances to step S203.

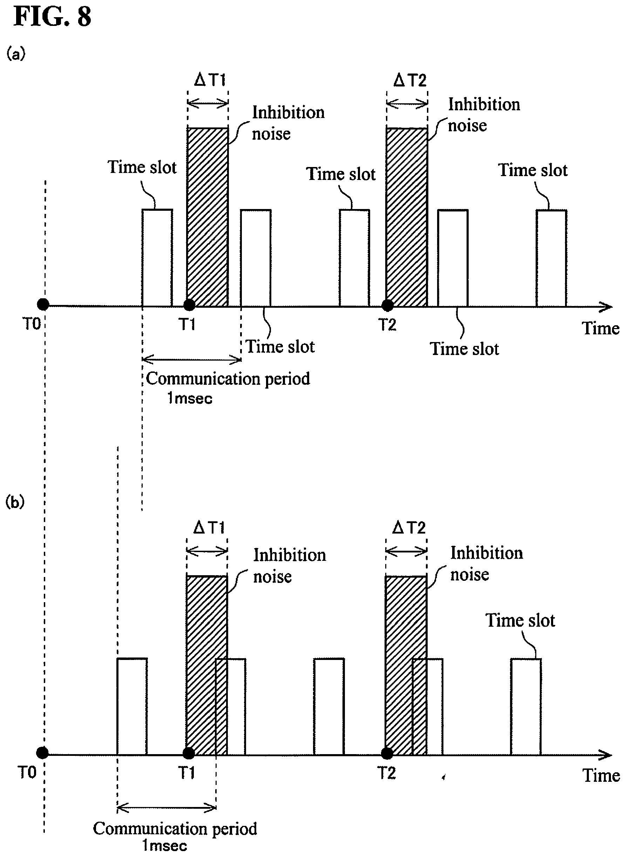

In step S203, communication permission times at which wireless communication for the radio 2a transmitting measurement information to the radio 1 is permitted are determined based on the noise information selected in step S202. The determination of these communication permission times will be described with reference to FIG. 8. The top (a) of FIG. 8 shows a situation of wireless communication performed in accordance with these communication permission times determined in the processing of step S203 in this measurement information transfer processing. On the other hand, the bottom (b) of FIG. 8 shows the situation of wireless communication performed in accordance with the times set in the radio 2 as default without this measurement information transfer processing. Also, the time axes in FIGS. 8(a) and 8(b) are the same as that shown in FIG. 5(c), and the time T0 is the time at which Driving Pattern 2 starts, the time T1 and the time T2 are the time at which a noise signal that exceeds an inhibition noise level is generated (thus, T1-T0 and T2-T0 correspond to the time elapsed from the start time T0 to the time at which this noise signal is generated), and periods ΔT1 and ΔT2 are each a period during which the respective noise signal continues.

As shown in FIG. 8, wireless communication from the radio 2a to the radio 1 is performed periodically, and this communication period is 1 msec, for example. Here, with regard to this periodic wireless communication, wireless communication is not performed for the entirety of one period, and as shown in FIG. 8, wireless communication is not actually performed except for periods occupied by time slots. These periods during which wireless communication is not performed correspond to a non-communication period of the invention of this application.

The communication permission times are determined in step S203, considering such periodic wireless communication being performed. Specifically, it is assumed that when the driving of the robot 3a and the like is controlled in accordance with Driving Pattern 2, noise signals during the periods ΔT1 and ΔT2 are generated when time T1-T0 and time T2-T0 have elapsed from the start time T0. In view of this, the time at which the radio 2a starts wireless communication with the radio 1 is controlled such that the above-described periodic wireless communication is not performed at these assumed noise generation times, that is, a noise signal is positioned during a period other than the periods occupied by the time slots of wireless communication in the communication period.

If the radio 2a starts periodic wireless communication with the radio 1 with the default wireless communication settings of the radio 2a, as shown in FIG. 8(b), a noise signal and a time slot for wireless communication overlap with each other. In view of this, the time at which the radio 2a starts wireless communication is adjusted, and for example, in the case of the present embodiment, the start time is delayed predetermined time from the state shown in FIG. 8(b). If transmission of measurement information is started in step S204 in accordance with the start time determined in this manner, as shown in FIG. 8(a), it is possible to avoid overlapping between the noise signal and the time slot for wireless communication. In this case, it is possible to avoid a situation in which wireless communication from the radio 2a to the radio 1 is substantially influenced by a noise signal generated in Driving Pattern 2, and accordingly to realize stable wireless communication.

### Modification 1

Although information transfer from the radio 2a to the radio 1 via wireless communication was described in the above-described measurement information transfer processing, similarly to this, by performing substantially similar processing, it is possible to perform information transfer that is not easily influenced by a noise signal even in the case where the radio 1 transfers information to the radio 2a. Note that the radio 1 is directly connected to the control apparatus 5, and thus information on the driving pattern is directly acquired from the control apparatus 5, and noise information corresponding to the currently used driving pattern is selected using the database stored in the noise information storage unit 12 in accordance with the acquired information. Thereafter, similarly to steps S203 and S204 above, the time at which periodic wireless communication from the radio 1 to the radio 2a is started is adjusted such that the noise signal and the time slot for wireless communication do not overlap with each other. Accordingly, similarly to the case where the radio 2a transfers information to the radio 1, it is possible to realize stable wireless communication in which the influence of the noise signal is avoided.

### Modification 2

In the above-described measurement information transfer processing, the influence of the noise signal is avoided by adjusting the period during which the measurement information is transmitted, considering time at which the noise signal is generated, in the noise information corresponding to the driving pattern. Instead of this aspect, transmission may also be controlled such that wireless communication between radios is performed at a frequency that is different from the frequency of the noise signal, in the noise information corresponding to the driving pattern. Accordingly, it is possible to reduce the influence of interference caused by the noise signal even in the case where a period (for example, ΔT1) during which the noise signal continues is relatively long and transmission cannot be controlled such that the noise signal does not overlap with the time slot for wireless communication and the noise signal is positioned in a period corresponding to the above-described non-communication period. Note that if the frequency of wireless communication between radios is adjusted, it is preferable to set a frequency that is as distant as possible from frequencies included in the noise signal.

### INDEX TO THE REFERENCE NUMERALS

- 1, 2a, 2b: Radio
- 3: Robot
- 4: Motor
- 5: Control apparatus
- 6: Noise detector
- 10: Wireless communication control system (system)

## Claims

1. A wireless communication control system comprising:
a control apparatus that controls driving of a driving device in accordance with a predetermined driving pattern;
a first radio; and
a second radio formed to be capable of performing wireless communication with the first radio,
wherein out of the first radio and the second radio, a radio that performs transmission has
a storage unit that stores predetermined noise information that is produced by measuring a noise signal caused by driving of the driving device in a state in which the driving of the driving device is controlled by the control apparatus in accordance with the driving pattern,
an acquisition unit that acquires the driving pattern that the control apparatus executes for the driving device, and
a control unit that selects the predetermined noise information from the storage unit in accordance with the driving pattern acquired by the acquisition unit, and performs transmission control such that information is transmitted to a reception radio in wireless communication between the first radio and the second radio, under a predetermined communication condition other than a wireless communication prohibition condition under which wireless communication between the first radio and the second radio is prohibited, the predetermined communication condition being determined based on the predetermined noise information.

2. The wireless communication control system according to claim 1,
wherein the first radio is electrically connected to the control apparatus and has a noise information production unit that produces the predetermined noise information.

3. The wireless communication control system according to claim 1, further comprising:
a noise information production apparatus that is electrically connected to the control apparatus and produces the predetermined noise information.

4. The wireless communication control system according to claim 1,
wherein the predetermined communication condition is that in the driving pattern, the transmission control is performed at a communication permission time other than a predetermined noise generation time at which a noise signal having a frequency belonging to a predetermined frequency band used in wireless communication between the first radio and the second radio is generated.

5. The wireless communication control system according to claim 4,
wherein the predetermined noise generation time is a time at which a noise signal having a frequency belonging to the predetermined frequency band is generated and an intensity of the noise signal is higher than a predetermined intensity.

6. The wireless communication control system according to claim 4,
wherein the control unit performs the transmission control such that the predetermined noise generation time in the driving pattern is positioned in a non-communication period during which actual wireless communication is not performed in a period of wireless communication between the first radio and the second radio in accordance with the communication permission time.

7. The wireless communication control system according to claim 6,
wherein the control unit positions the predetermined noise generation time in the non-communication period by controlling time at which wireless communication according to the wireless communication period is started based on the predetermined noise generation time in the driving pattern.

8. The wireless communication control system according to claim 1,
wherein the predetermined communication condition is that if the measured noise signal includes a noise signal having a frequency belonging to a predetermined frequency band used in wireless communication between the first radio and the second radio, the transmission control is performed in a frequency band for wireless communication other than the predetermined frequency band.

9. The wireless communication control system according to claim 1,
wherein the second radio is a sensor-equipped radio including a sensor that measures a predetermined environmental parameter, and transmits data on the measured predetermined parameter to the first radio via the wireless communication.

10. A wireless communication control apparatus that controls wireless communication performed by a first radio configured to be capable of performing wireless communication with a second radio in a predetermined environment in which driving of a driving device is controlled by a control apparatus in accordance with a predetermined driving pattern, the wireless communication control apparatus comprising:
a storage unit that stores predetermined noise information that is produced by measuring a noise signal caused by the driving of the driving device in a state in which the driving of the driving device is controlled by the control apparatus in accordance with the driving pattern;
an acquisition unit that acquires the driving pattern that the control apparatus executes for the driving device, and
a control unit that selects the predetermined noise information from the storage unit in accordance with the driving pattern acquired by the acquisition unit, and performs transmission control such that information is transmitted to a reception radio in wireless communication between the first radio and the second radio, under a predetermined communication condition other than a wireless communication prohibition condition under which wireless communication between the first radio and the second radio is prohibited, the predetermined communication condition being determined based on the predetermined noise information.

11. The wireless communication control apparatus according to claim 10, further comprising:
a noise information production unit that produces the predetermined noise information.

12. The wireless communication control apparatus according to claim 10,
wherein the wireless communication control apparatus is included in the first radio.

13. A method for controlling wireless communication that controls wireless communication performed by a first radio configured to be capable of performing wireless communication with a second radio in a predetermined environment in which driving of a driving device is controlled by a control apparatus in accordance with a predetermined driving pattern, the wireless communication control method comprising:
an acquisition step of the control apparatus acquiring a driving pattern that is applied to the control device;
a determination step of determining, based on predetermined noise information that is selected in accordance with the driving pattern acquired in the acquisition step and is produced using a noise signal caused by driving of the driving device, a predetermined communication condition other than a wireless communication prohibition condition under which wireless communication between the first radio and the second radio is prohibited; and
a control step of preforming transmission control such that information is transmitted to a reception radio in wireless communication between the first radio and the second radio under the predetermined communication condition that is determined in the determination step.
